# EUROPEAN PATENT SPECIFICATION

(11) **EP 4 117 230 B1**
(45) Date of publication and mention of the grant of the patent: **29.01.2025**
(21) Application number: 22182495.6
(22) Date of filing: 01.07.2022
(51) Int. Cl.: H04L 9/08, H04W 12/041, H04W 12/047, H04W 12/069, G07C 9/00

(54) **AUTHENTICATION METHOD BETWEEN TERMINALS HAVING PROXIMITY COMMUNICATION FUNCTION AND TERMINALS IMPLEMENTING THE SAME METHOD**
AUTHENTIFIZIERUNGSVERFAHREN ZWISCHEN ENDGERÄTEN, DIE EINE NAHKOMMUNIKATIONSFUNKTION AUFWEISEN, UND ENDGERÄTEN, DIE DIESES VERFAHREN IMPLEMENTIEREN
PROCÉDÉ D'AUTHENTIFICATION ENTRE TERMINAUX DOTÉS D'UNE FONCTION DE COMMUNICATION DE PROXIMITÉ ET TERMINAUX METTANT EN UVRE LEDIT PROCÉDÉ

(30) Priority: 07.07.2021 KR 20210089210; 12.04.2022 KR 20220044980
(43) Date of publication of application: 11.01.2023
(73) Proprietor: Samsung SDS Co., Ltd., Songpa-gu, Seoul (KR)
(72) Inventor: Kim, Dong Ho, Seoul (KR)
(74) Representative: Glawe, Delfs, Moll

(56) References cited:
- WO-A1-2021/089195

## Description

### CROSS REFERENCE TO RELATED APPLICATIONS AND CLAIM OF PRIORITY

This application claims priority from Korean Patent Application No. 10-2021-0089210 filed on July 07, 2021, and Korean Patent Application No. 10-2022-0044980 filed on April 12, 2022, in the Korean Intellectual Property Office.

### BACKGROUND

### 1. Technical Field

The present disclosure relates to an authentication method between terminals having a proximity communication function and terminals implementing the same method. More particularly, the present disclosure relates to an authentication method performed between terminals with an ultra-wide band (UWB) communication function and terminals for performing authentication using the same method.

### 2. Description of the Related Art

Recently, ultra-wide band (UWB) communication technologies have begun to be used for accurate distance measurement and data transmission with enhanced security. Specifically, the UWB communication technology has attracted great attention as a technology that accurately measures a relative position or distance between terminals indoors and outdoors, or controls access to buildings or vehicles and enables payment in stores or on public transportation without contact.

The Fine Ranging (FiRa) Consortium is a group of related companies that define standardized UWB communication technology, and the consortium has been defining technical specifications as a convenient way to use UWB technology and authentication and security for UWB technology.

Meanwhile, the current FiRa specification is defined to establish a secure channel via the "GENERAL AUTHENTICATE" command before performing authentication between terminals. However, since the current secure channel establishment process defined in the FiRa specification requires much time with a complicated procedure, it is difficult to quickly perform authentication between terminals (e.g., within about 1 second). Therefore, such a problem may decrease the usability and convenience of the UWB communication technology according to the FiRa specification.

[Sa] Prior art patent document WO 2021/089195 A1 (ASSA ABLOY AB [SE]) 14 May 2021, paragraph [0020], discloses that Bluetooth Low Energy, BLE, can be used for out-of-band, OOB, communications for credential discovery and application selection in case the credential device hosts multiple Ultra Wide Band, UWB, applications. A secure communication channel is established between the credential device 104 and the reader device 102 . The secure communication channel is used by the reader device 102 to retrieve the access credential. After successful authentication of the access credential, the reader device negotiates the UWB RF parameters and shares a temporary session key (e.g. using a security token service STS seed) with the credential device 104. At this point the out-of-band communication may be terminated and secure ranging with UWB is started.

### SUMMARY

Technical aspects to be achieved through one embodiment by the present disclosure provide an authentication method between terminals having a proximity communication function and terminals implemented to perform authentication using the same method.

More detailed technical aspects to be achieved through one embodiment by the present disclosure provide a method capable of quickly and safely performing authentication between terminals with a proximity communication function and terminals implemented to performing authentication using the same method.

Technical aspects to be achieved through one embodiment by the present disclosure also provide an authentication method designed to be easily reflected in the current FiRa specification.

The technical aspects of the present disclosure are not restricted to those set forth herein, and other unmentioned technical aspects will be clearly understood by one of ordinary skill in the art to which the present disclosure pertains by referencing the detailed description of the present disclosure given below.

According to some embodiments of the present disclosure, an authentication key may be previously shared between terminals, and a session key for ultra-wide band (UWB) ranging between the terminals may be generated using the shared authentication key and a random value. Accordingly, authentication between the terminals may be performed in a safe manner without using (establishing) a secure channel, an authentication process may be simplified, and time taken for authentication may be significantly reduced. Furthermore, the power consumed during authentication may be minimized.

In addition, the authentication key can be kept safely by storing the authentication key in a certain field of the application dedicated file (ADF).

In addition, the authentication key may be kept more safely by encrypting and storing the authentication key using an encryption key for a secure channel previously shared between the terminals.

In addition, the authentication key may be shared in an encrypted state using an encryption key for a secure channel previously shared between the terminals, thereby safely sharing the authentication key between the terminals.

Furthermore, since a new authentication mode that fails to use (establish) the secure channel may be added by the certain field in the ADF, the disclosed authentication method can be easily reflected in the current FiRa specification.

According to claim 1 of the present disclosure, there is provided an authentication method in a secure channel unused mode on a first terminal in which Fine Ranging (FiRa) applet is executed. The method includes generating a session basic information including a random value, transmitting the generated session basic information to a second terminal without establishing a secure channel with the second terminal, generating session data including a session key from the generated session basic information by using an authentication key pre-shared with the second terminal, and performing ultra-wide band (UWB) ranging with the second terminal by using the generated session data.

According to claim 8 of the present disclosure, there is provided an authentication method in a secure channel unused mode on a second terminal in which Fine Ranging (FiRa) applet is executed. The method includes receiving a session basic information including a random value from a first terminal without establishing a secure channel with the first terminal, generating session data including a session key from the received session basic information by using an authentication key pre-shared with the first terminal, and performing ultra-wide band (UWB) ranging with the first terminal by using the generated session data

According to another embodiments of the present disclosure, there is provided an authentication method in a secure channel unused mode on a first terminal in which Fine Ranging (FiRa) applet drives. The method includes acquiring an authentication key, being a key used to perform ultra-wide band (UWB) ranging-based authentication with a second terminal in the secure channel unused mode, storing the acquired authentication key in a first field of an application dedicated file (ADF), and sharing the acquired authentication key with the second terminal via a secure channel.

According to another embodiments of the present disclosure, there is provided an authentication method in a secure channel unused mode on a second terminal in which Fine Ranging (FiRa) applet drives. The method comprises receiving an authentication key from a first terminal via a secure channel, being a key used to perform ultra-wide band (UWB) ranging-based authentication with the first terminal in the secure channel unused mode, and storing the received authentication key in a first field of an application dedicated file (ADF).

### BRIEF DESCRIPTION OF THE DRAWINGS

The above and other aspects and features of the present disclosure will become more apparent by describing in detail exemplary embodiments thereof with reference to the attached drawings, in which:
FIG. 1 is a view illustrating an exemplary access control system to which an authentication method may be applied according to some embodiments of the present disclosure;
FIG. 2 is an exemplary block diagram illustrating terminals in which an authentication method is implemented according to some embodiments;
FIG. 3 is an exemplary flowchart illustrating a schematic flow of an authentication method according to some embodiments of the present disclosure;
FIGS. 4 and 5 are exemplary flowcharts illustrating an authentication key acquisition process according to one embodiment of the present disclosure;
FIGS. 6 and 7 are exemplary flowcharts illustrating an authentication key acquisition process according to another embodiment of the present disclosure;
FIGS. 8 and 9 are exemplary flowcharts illustrating an authentication key sharing process according to some embodiments of the present disclosure;
FIG. 10 is an exemplary flowchart illustrating a detailed process of an authentication key storage step illustrated in FIG. 9;
FIGS. 11 and 12 are exemplary flowcharts illustrating an authentication process according to some embodiments of the present disclosure;
FIG. 13 is an exemplary flowchart illustrating a detailed process of a session basic information generation step illustrated in FIG. 12;
FIG. 14 is an exemplary flowchart illustrating a detailed process of a session data generation step illustrated in FIG. 12;
FIGS. 15 and 16 are exemplary flowcharts illustrating an authentication key deletion process according to some embodiments of the present disclosure
FIG. 17 is an exemplary flowchart illustrating a detailed process of the authentication key deletion step illustrated in FIG. 16; and
FIG. 18 is a diagram illustrating an exemplary computing device capable of implementing terminals according to some embodiments of the present disclosure.

### DETAILED DESCRIPTION OF THE EMBODIMENTS

Hereinafter, preferred embodiments of the present disclosure will be described with reference to the attached drawings. Advantages and features of the present disclosure and methods of accomplishing the same may be understood more readily by reference to the following detailed description of preferred embodiments and the accompanying drawings. The present disclosure may, however, be embodied in many different forms and should not be construed as being limited to the embodiments set forth herein. Rather, these embodiments are provided so that this disclosure will be thorough and complete and will fully convey the concept of the disclosure to those skilled in the art, and the present disclosure will only be defined by the appended claims.

In adding reference numerals to the components of each drawing, it should be noted that the same reference numerals are assigned to the same components as much as possible even though they are shown in different drawings. In addition, in describing the present disclosure, when it is determined that the detailed description of the related well-known configuration or function may obscure the gist of the present disclosure, the detailed description thereof will be omitted.

Unless otherwise defined, all terms used in the present specification (including technical and scientific terms) may be used in a sense that can be commonly understood by those skilled in the art. In addition, the terms defined in the commonly used dictionaries are not ideally or excessively interpreted unless they are specifically defined clearly. The terminology used herein is for the purpose of describing particular embodiments only and is not intended to be limiting of the disclosure. In this specification, the singular also includes the plural unless specifically stated otherwise in the phrase.

In addition, in describing the component of this disclosure, terms, such as first, second, A, B, (a), (b), can be used. These terms are only for distinguishing the components from other components, and the nature or order of the components is not limited by the terms. If a component is described as being "connected," "coupled" or "contacted" to another component, that component may be directly connected to or contacted with that other component, but it should be understood that another component also may be "connected," "coupled" or "contacted" between each component.

Hereinafter, various embodiments of the present disclosure will be described with reference to the attached drawings:

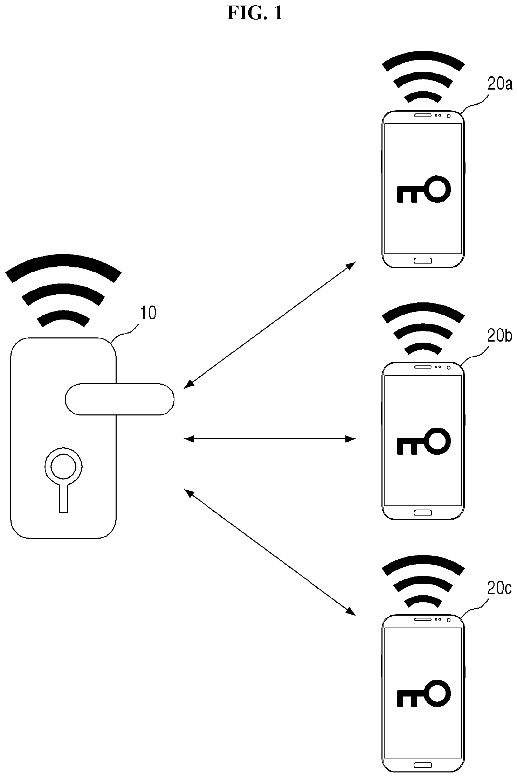

FIG. 1 is a view illustrating an exemplary system to which an authentication method may be applied according to some embodiments of the present disclosure. Specifically, FIG. 1 illustrates an access control system.

As illustrated in FIG. 1, an exemplary access control system may include a first terminal 10 and a plurality of second terminals 20a to 20c. Although not illustrated in FIG. 1, the exemplary access control system may further include a remote server.

The first terminal 10 may be a device that authenticates the second terminals 20a to 20c by proximity communication and controls access to the second terminals 20a to 20c (or a user with the terminals) based on the authentication results. For example, the first terminal 10 may previously register the plurality of second terminals 20a to 20c by executing a registration process, may measure a distance from the second terminals 20a to 20c via communication with the second terminals 20a to 20c disposed physically adjacent to each other, may authenticate the second terminals 20a to 20c, and may identify the second terminals 20a to 20c using previously registered information. For example, the first terminal 10 may detect the second terminals 20a to 20c registered in advance to provide a function of allowing access only to registered terminals.

The first terminal 10 may be, for example, a digital door lock that controls human access in buildings and/or houses, but the scope of the present disclosure is not limited thereto.

The first terminal 10 may include a proximity (or short-range) communication module. For example, the first terminal 10 may include one or more communication modules configured to support at least some communication technologies such as near field communication (NFC), Bluetooth (BLE), Bluetooth Low Energy (BLE), Ultra-Wide Band (UWB), and Wi-Fi.

The second terminals 20a to 20c are devices used for user access (or authentication), and may include, for example, a smart key, a smart phone, or the like. However, the scope of the present disclosure is not limited thereto. Hereinafter, for the convenience of explanation, the reference numeral "20" is used when one of the second terminals 20a to 20c is indicated or when the plurality of second terminals 20a to 20c are collectively indicated.

Similar to the first terminal 10, the second terminal 20 may also include a proximity (or short-range) communication module. For example, the second terminal 20 may also include one or more communication modules configured to support communication technologies such as NFC, Bluetooth, BLE, UWB, and Wi-Fi. In addition, the second terminal 20 may further include a FIDO security authentication module.

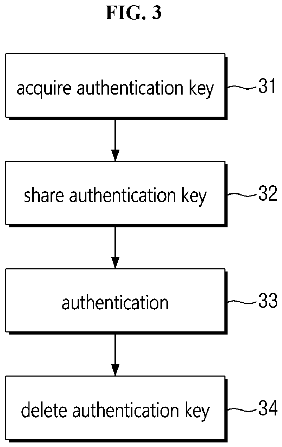

Meanwhile, in some embodiments, the authentication key may be previously shared between the first terminal 10 and the second terminal 20. In addition, when the first terminal 10 and the second terminal 20 are physically adjacent to each other, the authentication is performed between the terminals 10 and 20 in a safe manner without establishing (using) a secure channel according to the FiRa specification. Accordingly, the authentication and access control of the second terminal 20 may be performed quickly, and the present embodiment associated therewith will be described in detail later with reference to FIG. 3 below.

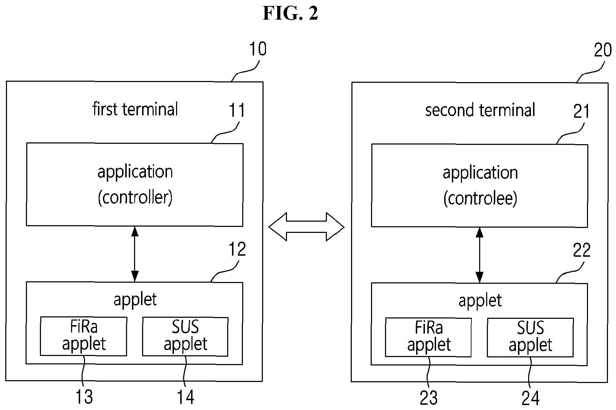

So far, an exemplary access control system to which the authentication method according to some embodiments of the present disclosure may be applied has been described. Hereinafter, the terminals 10 and 20 in which the authentication method according to some embodiments of the present disclosure is implemented will be briefly described with reference to FIG. 2.

FIG. 2 is an exemplary block diagram illustrating terminals in which an authentication method is implemented according to some embodiments of the present disclosure.

As illustrated in FIG. 2, the first terminal 10 may include one or more applications 11 and an applet 12, and the second terminal 20 may also include one or more applications 21 and an applet 22. However, FIG. 2 illustrates only components associated with the embodiment of the present disclosure. Accordingly, it may be found by a person skilled in the art to which the present disclosure belongs that other universal components (e.g., a processor, a memory, and an input/output interface) may be further included in addition to the components illustrated in FIG. 2. In addition, the components of the first terminal 10 and the second terminal 20 illustrated in FIG. 2 represent functional elements that are functionally distinguished from each other, and may be implemented in a form in which a plurality of components are integrated with each other in an actual physical environment or in a form in which a specific functional element is separated into a plurality of sub-functional elements. Hereinafter, each component will be described in detail.

First, the application 11 driven by the first terminal 10 may be an application in which a controller-side function defined in the FiRa specification is implemented. The application 11 may include a FiRa framework and/or an application using the FiRa framework. In addition, the application 11 may further include an application configured to implement functions according to various purposes, such as access authentication, unlocking, vehicle operation, and payment, in which the first terminal 10 is utilized.

The application 11 may establish a communication channel (e.g., a secure channel) with another terminal, for example, the second terminal 20, via any communication module provided in the first terminal 10, and exchange data through the established communication channel.

The applet 12 driven by the first terminal 10 may be a component that provides functions, such as UWB communication and authentication, to the application 11 of the first terminal 10. The applet 12 may be executed (driven) within a secure element (e.g., an embedded secure element (eSE)) of the first terminal 10. However, the scope of the present disclosure is not limited thereto. The applet 12 may collectively refer to different kinds of applets driven by the first terminal 10.

As illustrated, the applet 12 may include a FiRa applet 13 and a secure UWB service (SUS) applet 14. The applet 12 may further include another applet defined in the FiRa specification (or implemented in the FiRa specification). The FiRa applet 13 may support a variety of functions required for terminal authentication, such as authentication key generation, and a session management function for UWB communication with a counterpart terminal (e.g., the terminal 20).

Detailed functions and operations of the application 11 and the applet 12 will be described in more detail with reference to FIG. 3 below.

Next, the configuration of the second terminal 20 will be described.

The application 21 driven by the second terminal 20 may be an application in which a controlee-side function is implemented in the FiRa specification. The application 21 may include a FiRa framework and/or the application using the FiRa framework. In addition, the application 21 may further include an application configured to implement functions according to various purposes, such as access authentication, unlocking, vehicle operation, and payment, in which the second terminal 20 is utilized.

The application 21 may establish a communication channel (e.g., a secure channel) with another terminal, for example, the first terminal 10, via any communication module provided in the second terminal 20 and exchange data via the established communication channel.

The applet 22 driven by the second terminal 20 may be a component that provides functions, such as UWB communication and authentication, to the application 21 of the second terminal 20. The applet 22 may be executed (driven) within the secure element of the second terminal 20, but the scope of the present disclosure is not limited thereto. The applet 22 may collectively refer to different kinds of applets driven by the second terminal 20.

As illustrated, the applet 22 may also include a FiRa applet 23 and a SUS applet 24, and the applet 22 may further include another applet defined in the FiRa specification (or configured to implement a function defined in the FiRa specification). Alternatively, the second terminal 20 may further include an applet other than the applet 22. A further description of the applet 22 will be additionally referenced in the description of the applet 12 of the first terminal 10.

Detailed functions and operations of the application 21 and the applet 22 will be described in more detail with reference to FIG. 3 below.

So far, the terminals 10 and 20 according to some embodiments of the present disclosure have been described with reference to FIG. 2. Hereinafter, an authentication method according to some embodiments of the present disclosure will be described.

As described above, in the current FiRa specification, since the secure channel is established via the "GENERAL AUTHENTICATE" command (or message) before performing authentication between the terminals, it is difficult to quickly perform authentication between terminals. To solve this problem, the inventors of the present disclosure have devised a new authentication method.

Specifically, the present inventors have devised a method capable of previously sharing an authentication key (i.e., a key used for UWB ranging-based authentication) between the terminals and quickly and safely performing authentication using the pre-shared authentication key and a random value without establishing the secure channel. In addition, the present inventors have designed an authentication method in a form that the method can be easily reflected in the current FiRa specification such that FiRa specification-based terminals can use the designed authentication method.

Specifically, in order to maintain compatibility with the current FiRa specification and easily reflect the designed authentication method in the FiRa specification, the present inventors have designed a new authentication mode to be set using an application dedicated file (ADF), and also designed the method so that authentication is performed by terminals according to the designed authentication method in the case where a setting value of the ADF is in the new authentication mode. In the following description, the newly defined authentication mode may be referred to as a "secure channel unused mode" or a "fast authentication mode."

For example, as illustrated in Table 1 below, the fast authentication mode may be set (added) using the extended option field of the ADF, and more specifically, the fast authentication mode may be set (added) via the field that sets a UWB session key derivation scheme (e.g., see 110: Fast authentication). However, the scope of the present disclosure is not limited thereto, and a fast authentication mode may be set in another manner. For example, the new authentication mode may be set (added) using an RFU area of the extended option field, an application data field of the ADF, or other elements other than the ADF.

**[Table 1]**

| Byte | Bits | Values |
|---|---|---|
| 1 | 8 | Automatic session termination |
| | 7 | Privacy selection |
| | 6-1 | RFU |
| 2 | 8-6 | UWB session key derivation scheme |
| | | 110: Fast authentication |
| | 5-1 | RFU |
| 3 | 8-1 | RFU |
| 4 | 8-1 | RFU |

However, in order to provide convenience of understanding, a further description will be continued hereinafter assuming that the "fast authentication mode" is set as described in Table 1 above.

Hereinafter, some embodiments of an authentication method devised with reference to FIG. 3 will be described in more detail.

First, FIG. 3 is an exemplary flowchart illustrating a schematic flow of an authentication method according to some embodiments of the present disclosure.

As illustrated in FIG. 3, the authentication method according to embodiments may be composed of a plurality of processes 31 to 34, for example, an authentication key acquisition process 31, an authentication key sharing process 32, an authentication process 33, and an authentication key deletion process 34. Although FIG. 3 illustrates how the processes 31 to 34 are performed sequentially, the scope of the present disclosure is not limited thereto, and the order of performing the processes 31 to 34 may vary in some cases.

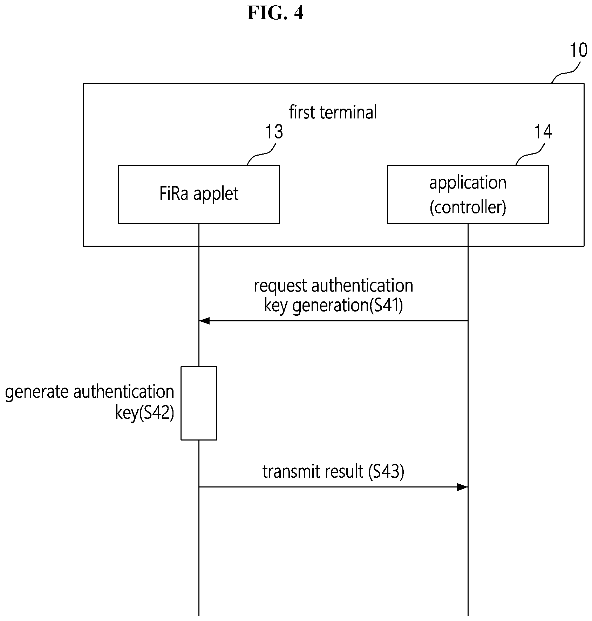

In the authentication key acquisition process 31, the first terminal 10 may acquire an authentication key. For example, the first terminal 10 may generate the authentication key by itself or may receive the authentication key from the outside. The present process 31 will be described in detail later with reference to FIGS. 4 to 7.

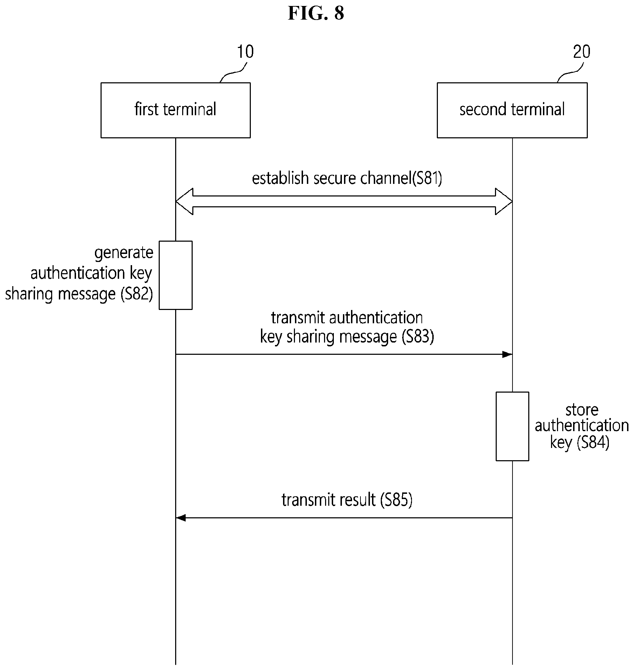

Next, in the authentication key sharing process 32, the authentication key may be shared between the first terminal 10 and the second terminal 20. For example, the first terminal 10 may share the authentication key by transmitting the acquired authentication key to the second terminal 20 via the secure channel. The secure channel between the first terminal 10 and the second terminal 20 may be established based on the FiRa specification. The present process 32 will be described in detail later with reference to FIGS. 8 to 10.

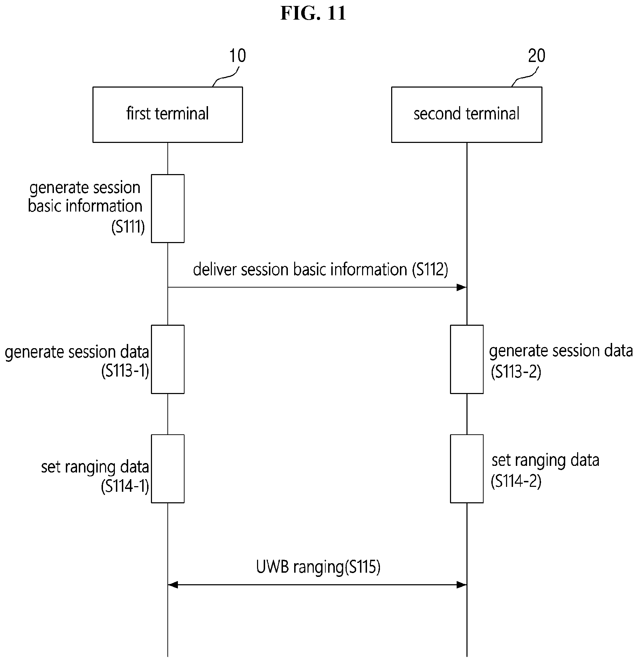

Next, in the authentication process 33, the authentication may be performed between the first terminal 10 and the second terminal 20. For example, the first terminal 10 and the second terminal 20 may generate the session data including a session key using the shared authentication key, and may perform UWB ranging-based authentication using the generated session data. The present process 33 will be described in detail later with reference to FIGS. 11 to 14.

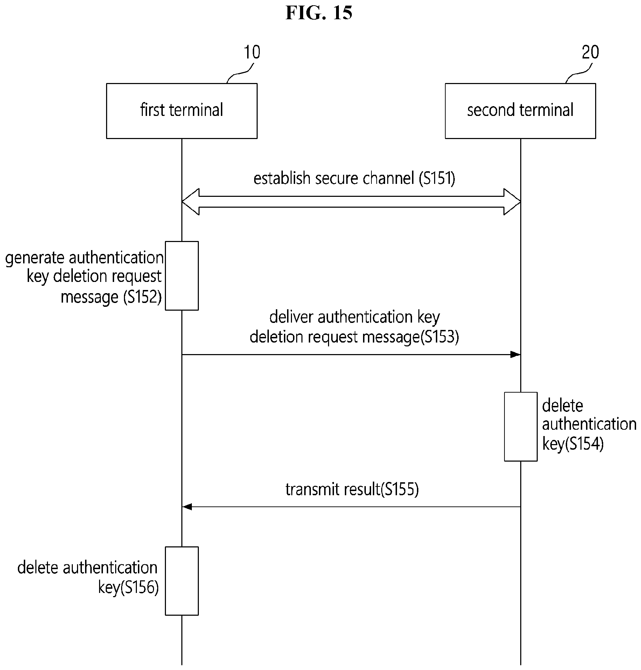

Next, in the authentication key deletion process 34, the authentication key shared via the authentication key sharing process 32 may be deleted. The present process 34 will be described in detail later with reference to FIGS. 15 to 17.

The authentication method according to some embodiments of the present disclosure has been schematically described with reference to FIG. 3. Hereinafter, each of the process 31 to 34 constituting the authentication method will be described in detail.

First, an authentication key acquisition process 31 according to some embodiments of the present disclosure will be described in detail with reference to FIGS. 4 to 7.

FIG. 4 is an exemplary flowchart illustrating an authentication key acquisition process according to an embodiment of the present disclosure. However, this is only a preferred embodiment for achieving the object of the present disclosure, and some steps may be added or deleted as necessary.

As illustrated in FIG. 4, the present embodiment relates to a method in which the first terminal 10 directly generates the authentication key, and may be performed between the FiRa applet 13 and the application 11. However, the initiation of the authentication key acquisition process may be performed by an external request.

Specifically, the present embodiment may begin at a step S41 in which the application 11 transmits an authentication key generation request. For example, the application 11 may transmit an authentication key generation request message to the FiRa applet 13 driven in the secure element. The authentication key generation request may be implemented, for example, via a "GET DATA" command (or message) (e.g., a command Application Protocol Data Unit (APDU) message) specified in the FiRa specification. As a more specific example, when the "GET DATA" command (e.g., a command for reading the authentication key in a predefined authentication key storage area) is received without the authentication key, the FiRa applet 13 may be implemented to generate the authentication key. However, the scope of the present disclosure is not limited thereto. In the following description, "transmission of the request" may mean an operation of transmission of the request message.

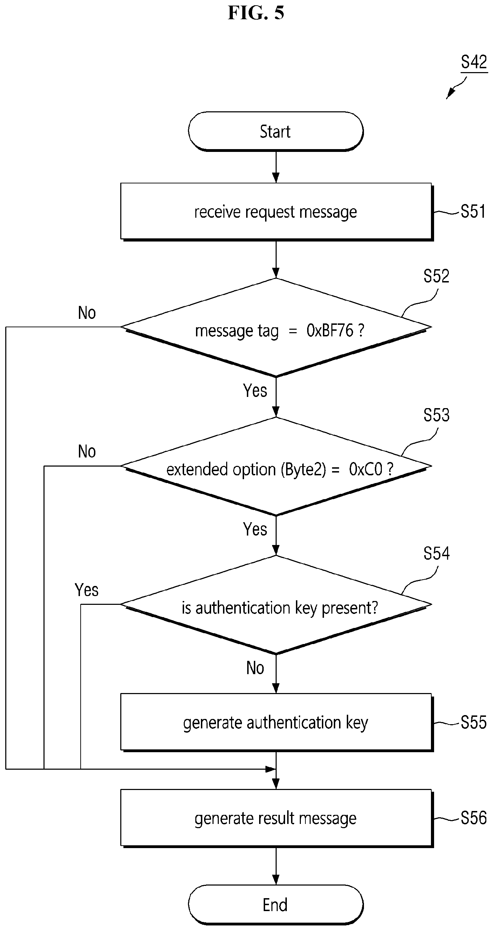

In a step S42, in response to a received request, the FiRa applet 13 may generate the authentication key. A detailed process of the present step is illustrated in FIG. 5

As illustrated in FIG. 5, the authentication key generation step S42 may begin when the FiRa applet 13 receives the authentication key generation request message (S51).

In a step S52, the FiRa applet 13 may check a tag of the authentication key request message. For example, the FiRa applet 13 may check whether the tag of the received request message is an application data tag. In FIG. 5, because a value of the application data tag defined in the FiRa specification is "0xBF76," the tag of the message is compared with "0xBF76."

In a step S53, the FiRa applet 13 may determine whether a current authentication mode is the fast authentication mode (i.e., a secure channel unused mode) by using the extended option field of the ADF.

For example, as illustrated, it may be checked whether a second byte value of the extended option field is "0xC0." The reason for checking whether the second byte value is "0xC0" is that when the fast authentication mode is defined as "110" (a value of 8-6 bits) (see Table 1), the value of the second byte becomes "0xC0." As described above, when the fast authentication mode is defined in another way (e.g., in the case of using different values or other fields), the present step may also be modified accordingly.

In a step S54, the FiRa applet 13 may determine whether the authentication key is present. For example, the FiRa applet 13 may determine whether the authentication key is present in a certain field (i.e., a predefined authentication key area) of the ADF using an instance UID (Unique IDentifier) of the ADF. In this case, the predefined authentication key area may be, for example, the application data field of the ADF, but the scope of the present disclosure is not limited thereto. However, for the convenience of understanding, a further description will be continued hereinafter assuming that the authentication key is stored in the application data field of the ADF. In response to determining that the authentication key fails to be present, a step S55 may occur.

In the step S55, the FiRa applet 13 may generate the authentication key. For example, the FiRa applet 13 may generate the authentication key using a random value generation algorithm or a key generation algorithm widely known in the art to which the present disclosure belongs. The generated authentication key may be stored in the application data field of the ADF, or may be stored in an encrypted state to improve security. For example, the generated authentication key may be stored in the encrypted state by an encryption key for the secure channel that is pre-shared according to the FiRa specification.

In a step S56, the FiRa applet 13 may generate a message indicating performance results. For example, the FiRa applet 13 may generate an error message according to the performance results (e.g., a message tag mismatch, an authentication mode mismatch, etc.), or a result message including the generated authentication key or a pre-stored authentication key. In this case, the authentication key may be included in the result message in the encrypted state by the encryption key to improve security. For example, the authentication key may be encrypted with the encryption key for the secure channel.

Table 2 below illustrates a format of the result message that may be generated in the step S56 described above.

**[Table 2]**

| Tag | Length | Description | Presence |
|---|---|---|---|
| 0x7A | Variable | Add key data | Mandatory |
| 0x80 | 1 to 16 | Instance UID | Mandatory |
| 0x81 | 1 | Status | Mandatory |
| 0x82 | 16 | Key data (Encrypted) | Mandatory |

In Table 2 above, since key data refers to an authentication key and a value of "0x7A" is a tag value of a message newly defined in association with the authentication key acquisition process, the value can be changed arbitrarily.

Meanwhile, although not illustrated in FIG. 5, the FiRa applet 13 may check whether the secure channel is established (e.g., it may check whether the secure channel is established with an external terminal when the authentication key acquisition process is initiated by a request of the external terminal) in some cases, and when the secure channel is found not to be established, the FiRa applet 13 may stop the authentication key generation process and generate an error message.

It will be described again with reference to FIG. 4.

In the step S43, the FiRa applet 13 may transmit an authentication key generation result to the application 11. For example, the FiRa applet 13 may transmit the result message generated in the aforementioned step S56 to the application 11. The transmission of such a result message may be implemented, for example, with a "GET DATA RESPONSE" command defined in the FiRa specification. However, the scope of the present disclosure is not limited thereto. In the following description, "transmission of the result" may mean an operation of transmission of the result message.

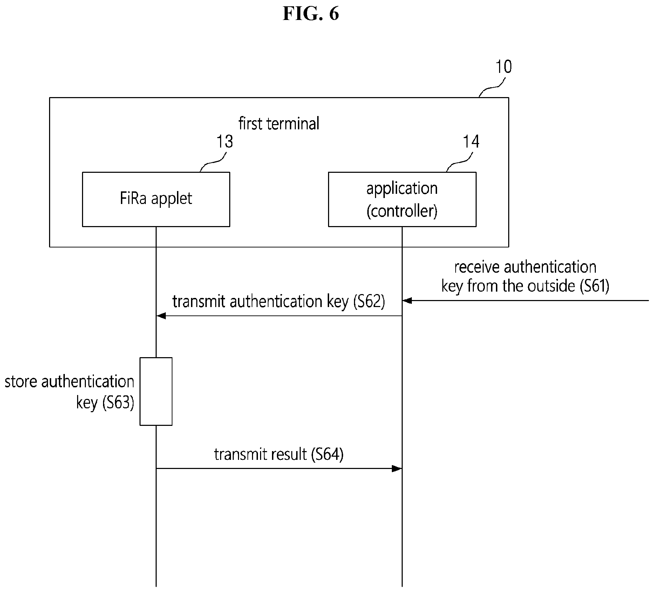

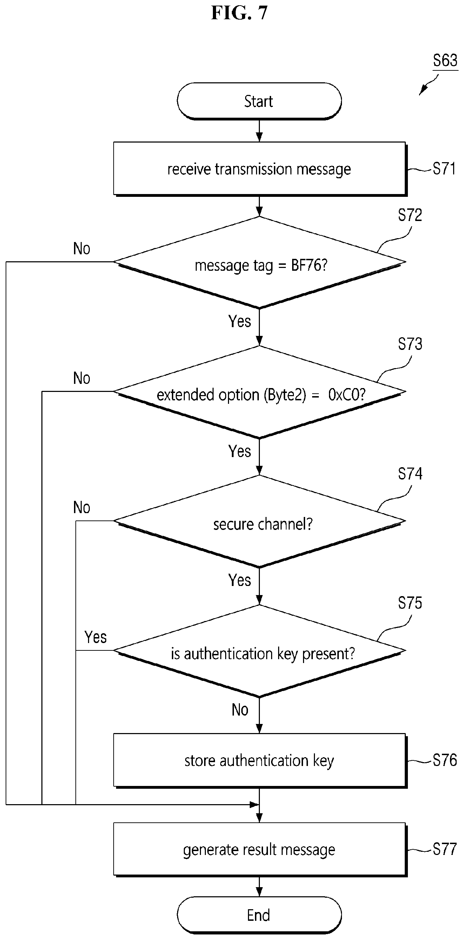

So far, the authentication key acquisition process according to one embodiment of the present disclosure has been described with reference to FIGS. 4 and 5. Hereinafter, the authentication key acquisition process according to another embodiment of the present disclosure will be described with reference to FIGS. 6 and 7.

FIG. 6 is an exemplary flowchart illustrating the authentication key acquisition process according to another embodiment of the present disclosure. However, this is only a preferred embodiment for achieving the object of the present disclosure, and some steps may be added or deleted as necessary.

As illustrated in FIG. 6, the present embodiment relates to a method in which the first terminal 10 receives an authentication key from the outside, and may be performed between the FiRa applet 13 and the application 11.

Specifically, the present embodiment may begin at step S61 in which the application 11 receives the authentication key from the outside. In this case, the secure channel may be established between the first terminal 10 and the outside in a manner defined in the FiRa specification.

In a step S62, the application 11 may transmit the authentication key to the FiRa applet 13. The transmission of the authentication key may be implemented, for example, with a "PUT DATA" command defined in the FiRa specification. However, the scope of the present disclosure is not limited thereto.

In a step S63, the FiRa applet 13 may store the authentication key. A detailed process of the present step is illustrated in FIG. 7.

As illustrated in FIG. 7, an authentication key storage step S63 may begin when the FiRa applet 13 receives an authentication key transmission message (S71). A format of the authentication key transmission message may be designed, for example, as illustrated in Table 3 below, but the scope of the present disclosure is not limited thereto. As described above, the key data means the authentication key.

**[Table 3]**

| Tag | Length | Description | Presence |
|---|---|---|---|
| 0xBF76 | Variable | Application data tag | Mandatory |
| 0x7A | Variable | Add key data | Mandatory |
| 0x80 | 1 to 16 | Instance UID | Mandatory |
| 0x81 | 1 | Status | Mandatory |
| 0x82 | 16 | Key data (Encrypted) | Mandatory |

In a step S72, the FiRa applet 13 may check the tag of the authentication key transmission message. For example, the FiRa applet 13 may check whether the tag of the received transmission message is an application data tag.

In a step S73, the FiRa applet 13 may determine whether the current authentication mode is the fast authentication mode by using the setting value in the extended option field of the ADF.

In a step S74, the FiRa applet 13 may check whether the secure channel is established with the outside.

In a step S75, the FiRa applet 13 may determine whether the authentication key is present. For example, the FiRa applet 13 may determine whether the authentication key is present in the application data field of the ADF using the instance UID of the authentication key transmission message. In response to determining that the authentication key fails to be present, a step S76 may occur.

In the step S76, the FiRa applet 13 may store the authentication key. For example, the FiRa applet 13 may store the authentication key received in the application data field of the ADF. In this case, the FiRa applet 13 may store the authentication key in the encrypted state to improve security. For example, the authentication key may be encrypted using the encryption key for the secure channel.

In some cases, even when the authentication key is present, the FiRa applet 13 may store the received authentication key. For example, the FiRa applet 13 may update (replace) the existing (stored) authentication key with the received authentication key.

In a step S77, the FiRa applet 13 may generate a message indicating the performance results. For example, the FiRa applet 13 may generate the error message (e.g., a message tag mismatch, an authentication mode mismatch, the presence of the authentication key, the non-establishment of the secure channel, etc.), or the result message including the stored authentication key, according to the performance results. In this case, the authentication key may be included in the result message in the encrypted state by the encryption key to improve security. For example, the authentication key may be encrypted with the encryption key for the secure channel.

A format of the result message that may be generated in the step S77 may be designed, for example, as illustrated in Table 4 below. However, the scope of the present disclosure is not limited thereto.

**[Table 4]**

| Tag | Length | Description | Presence |
|---|---|---|---|
| 0x7A | Variable | Add key data | Mandatory |
| 0x80 | 1 to 16 | Instance UID | Mandatory |
| 0x81 | 1 | Status | Mandatory |
| 0x82 | 16 | Key data (Encrypted) | Mandatory |

It will be described again with reference to FIG. 6.

In the step S64, the FiRa applet 13 may transmit an authentication key storage result to the application 11. For example, the FiRa applet 13 may transmit the result message generated in the step S77 described above to the application 11.

So far, the authentication key acquisition process 31 according to some embodiments of the present disclosure has been described with reference to FIGS. 4 to 7. Hereinafter, the authentication key sharing process 32 according to some embodiments of the present disclosure will be described in detail with reference to FIGS. 8 to 10.

FIG. 8 is an exemplary flowchart illustrating the authentication key sharing process 32 according to some embodiments of the present disclosure. However, this is only a preferred embodiment for achieving the object of the present disclosure, and some steps may be added or deleted as necessary.

As illustrated in FIG. 8, the authentication key sharing process 32 according to embodiments may begin at a step S81 of establishing the secure channel between the first terminal 10 and the second terminal 20. Refer to the FiRa specification for a detailed process of establishing the secure channel using a "GENERAL AUTHENTICATE" message. In addition, although not illustrated in FIG. 8, after establishing the secure channel, a step of setting a UWB environment between the first terminal 10 and the second terminal 20 according to the FiRa specification may be further performed. Refer also to the FiRa specification for a detailed process of setting the UWB environment.

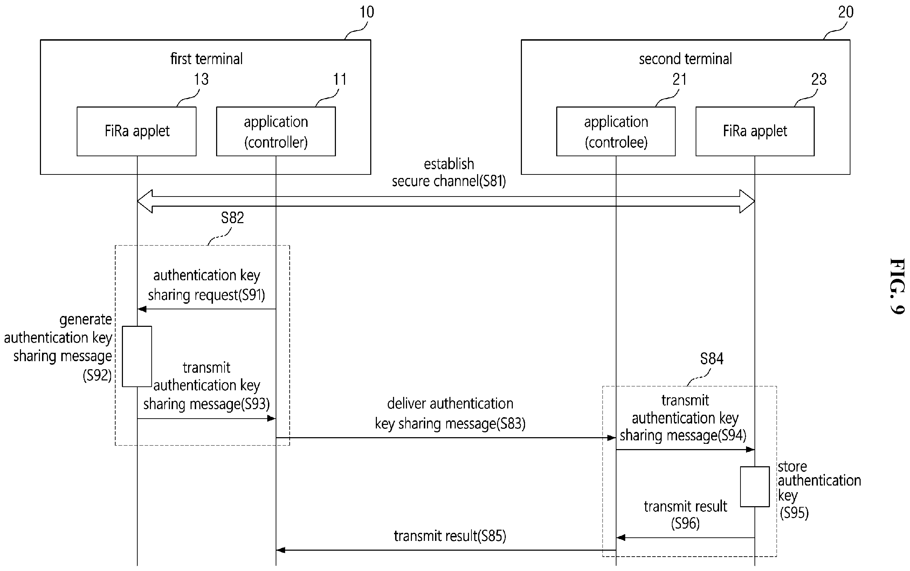

In a step S82, the first terminal 10 may generate an authentication key sharing message. The authentication key sharing message may include, for example, the authentication key and the UID of the ADF. However, the scope of the present disclosure is not limited thereto. A detailed process of the present step is illustrated in FIG. 9.

As illustrated in FIG. 9, the FiRa applet 13 may generate the authentication key sharing message in response to an authentication key sharing request of the application 11 and transmit the generated message to the application 11 (S91 to S93). In this case, the authentication key may be included in the authentication key sharing message in the encrypted state by the encryption key to improve security. For example, the authentication key may be encrypted with the encryption key for the secure channel.

The authentication key sharing request may be implemented, for example, with "TUNNEL" and "PUT DATA" commands as defined in the FiRa specification, and an authentication key sharing message transmission may be implemented with a "DISPATCH RESPONSE" command as defined in the FiRa specification. However, the scope of the present disclosure is not limited thereto.

A format of the authentication key sharing message that may be generated in a step S92 may be designed, for example, as illustrated in Table 5 below. However, the scope of the present disclosure is not limited thereto.

**[Table 5]**

| Tag | Length | Description | Presence |
|---|---|---|---|
| 0xBF76 | Variable | Application data tag | Mandatory |
| 0x7A | Variable | Add key data | Mandatory |
| 0x80 | 1 to 16 | Instance UID | Mandatory |
| 0x81 | 1 | Status | Mandatory |
| 0x82 | 16 | Key data (Encrypted) | Mandatory |

It will be described again with reference to FIG. 8.

In a step S83, the first terminal 10 may transmit the authentication key sharing message to the second terminal 20. The transmission of the authentication key sharing message may be implemented, for example, with a "DISPATCH REQUEST" command defined in the FiRa specification. However, the scope of the present disclosure is not limited thereto.

In a step S84, the second terminal 20 may receive the authentication key sharing message and store the authentication key included in the message. A detailed process of the present step is illustrated in FIG. 9.

As illustrated in FIG. 9, the application 21 may receive the authentication key sharing message and transmit the authentication key to the FiRa applet 23, and the FiRa applet 23 may store the authentication key and transmit the stored result to the application 21 (S94 to S96). herein, the transmission of the authentication key storage result may be implemented for example, with the "DISPATCH RESPONSE" command defined in the FiRa specification. However, the scope of the present disclosure is not limited thereto.

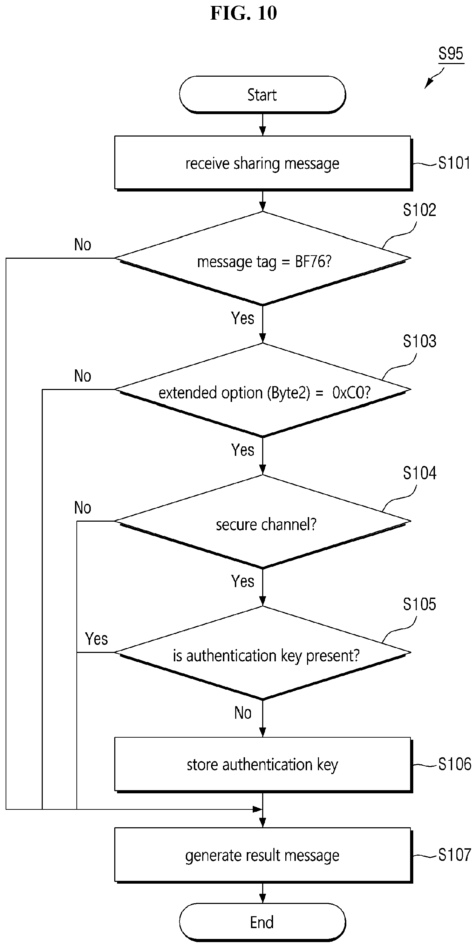

A detailed process of the step S95 is illustrated in FIG. 10.

As illustrated in FIG. 10, an authentication key storage step S95 may begin when the FiRa applet 23 receives the authentication key sharing message (S101). A format of the authentication key sharing message may be designed, for example, as illustrated in Table 6 below, but the scope of the present disclosure is not limited thereto. As described above, the key data means the authentication key.

**[Table 6]**

| Tag | Length | Description | Presence |
|---|---|---|---|
| 0xBF76 | Variable | Application data tag | Mandatory |
| 0x7A | Variable | Add key data | Mandatory |
| 0x80 | 1 to 16 | Instance UID | Mandatory |
| 0x81 | 1 | Status | Mandatory |
| 0x82 | 16 | Key data (Encrypted) | Mandatory |

In a step S 102, the FiRa applet 23 may check the tag of the authentication key sharing message. For example, the FiRa applet 23 may check whether the tag of the received shared message is the application data tag.

In a step S 103, the FiRa applet 23 may determine whether the current authentication mode is the fast authentication mode by using the setting value of the extended option field of the ADF.

In a step S104, the FiRa applet 23 may check whether the secure channel is established with the first terminal 10.

In a step S105, the FiRa applet 23 may determine whether the authentication key is present. For example, the FiRa applet 23 may determine whether the authentication key is present in the application data field of the ADF using the instance UID of the authentication key sharing message. In response to determining that the authentication key fails to be present, a step S 106 may occur.

In the step S106, the FiRa applet 23 may store the authentication key. For example, the FiRa applet 23 may store a received authentication key in the application data field of the ADF.

In some cases, even when the authentication key is present, the FiRa applet 23 may store the received authentication key. For example, the FiRa applet 23 may update (replace) the existing (stored) authentication key with the received authentication key.

In a step S107, the FiRa applet 23 may generate the message indicating the performance results. For example, the FiRa applet 23 may generate the error message (e.g., a message tag mismatch, an authentication mode mismatch, the presence of the authentication key, the non-establishment of the secure channel, etc.), or the result message including the stored authentication key, according to the performance results. In this case, the authentication key may be included in the result message in the encrypted state by the encryption key to improve security. For example, the authentication key may be encrypted with the encryption key for the secure channel.

A format of the result message that may be generated in the step S107 may be designed, for example, as illustrated in Table 7 below. However, the scope of the present disclosure is not limited thereto.

**[Table 7]**

| Tag | Length | Description | Presence |
|---|---|---|---|
| 0x7A | Variable | Add key data | Mandatory |
| 0x80 | 1 to 16 | Instance UID | Mandatory |
| 0x81 | 1 | Status | Mandatory |
| 0x82 | 16 | Key data (Encrypted) | Mandatory |

It will be described again with reference to FIG. 8.

In a step S85, the second terminal 20 may transmit the authentication key storage result to the first terminal 10. For example, as illustrated in FIG. 9, the application 21 of the second terminal 20 may transmit the result message generated in a step S96 to the application 11 of the first terminal 10. Herein, the transmission of the authentication key storage result may be implemented, for example, with the "DISPATCH REQUEST" command defined in the FiRa specification. However, the scope of the present disclosure is not limited thereto.

So far, the authentication key sharing process 32 according to some embodiments of the present disclosure has been described with reference to FIGS. 8 to 10. As described above, the authentication key may be securely shared between the terminals 10 and 20 through a secure channel. In addition, the authentication key may be shared in the encrypted state using the encryption key for a pre-shared secure channel, thus more safely sharing the authentication key between the terminals 10 and 20. In addition, the authentication may be quickly performed between terminals 10 and 20 without establishing the secure channel during actual authentication by using the shared authentication key.

Hereinafter, the authentication process 33 according to some embodiments of the present disclosure will be described in detail with reference to FIGS. 11 to 14.

FIG. 11 is an exemplary flowchart illustrating an authentication process 33 according to some embodiments of the present disclosure. However, this is only a preferred embodiment for achieving the object of the present disclosure, and some steps may be added or deleted as necessary.

As illustrated in FIG. 11, the authentication process 33 according to the embodiments may begin at a step S111 in which the first terminal 10 generates session basic information. The session basic information is information that underlies generation of session data (or information used to generate the session data), and may include, for example, the instance UID of an ADF and the random value. However, the present disclosure is not limited thereto.

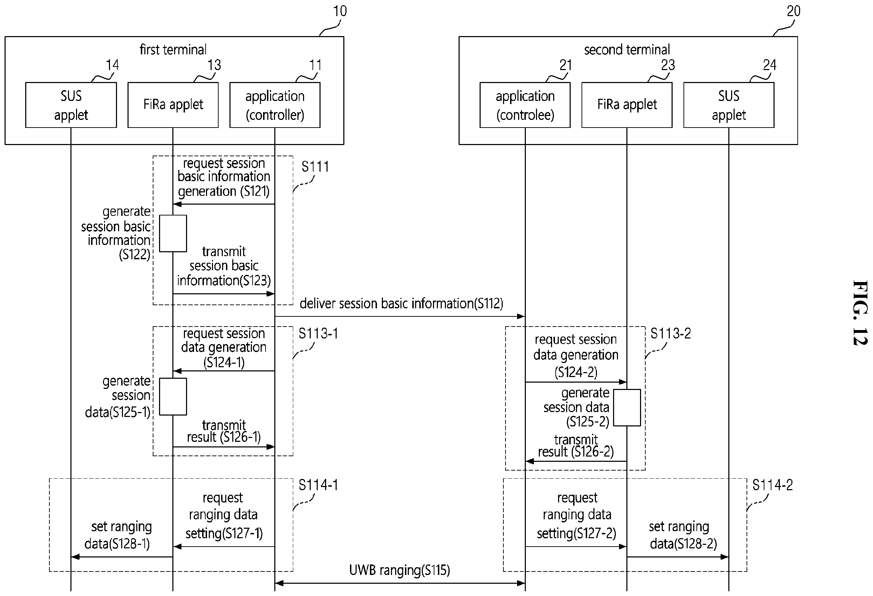

More specifically, as illustrated in FIG. 12, the FiRa applet 13 may generate the session basic information in response to a request of the application 11 and transmit the generated session basic information to the application 11 (S121 to S123). The request for generating session basic information may be implemented, for example, with the "GET DATA" command defined in the FiRa specification. However, the scope of the present disclosure is not limited thereto.

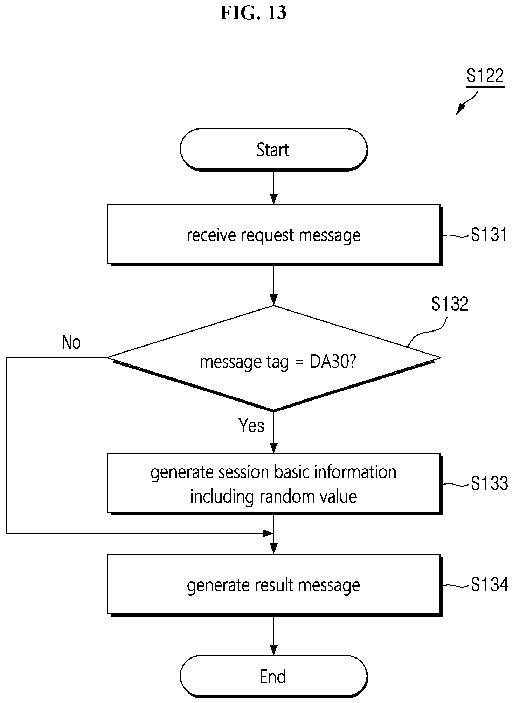

A detailed process of a step S122 is illustrated in FIG. 13.

As illustrated in FIG. 13, a session basic information generation step S122 may begin when the FiRa applet 13 receives the request message (S131).

In a step S132, the FiRa applet 13 may check the tag of the received request message. In other words, the FiRa applet 13 may check whether the tag value of the received request message matches a predefined tag value of a session basic information-related message. FIG. 13 illustrates that the predefined tag value is "0xDA30", but the value may be changed arbitrarily.

In a step S133, the FiRa applet 13 may generate the session basic information including the random value. As described above, the session basic information may include the random value, and the instance UID of the ADF (that is, an ADF at a controller).

In a step S134, the FiRa applet 13 may generate the message indicating the performance results. For example, the FiRa applet 13 may generate the error message according to the performance results (e.g., a message tag mismatch, etc.), or may generate the result message including the session basic information, according to the performance results.

A format of the result message that may be generated in the step S134 may be designed, for example, as illustrated in Table 8 below. However, the scope of the present disclosure is not limited thereto.

**[Table 8]**

| Tag | Length | Description | Presence |
|---|---|---|---|
| 0xDA30 | Variable | Fast authentication session basic info | Mandatory |
| 0x80 | Variable | Instance UID of controller | Mandatory |
| 0x81 | Variable | Random value | Mandatory |

It will be described again with reference to FIG. 11.

In a step S112, the first terminal 10 may transmit the generated session basic information to the second terminal 20.

In steps S113-1 and S1 13-2, each of the first terminal 10 and the second terminal 20 may generate the session data based on the session basic information. The session data may include, for example, a session ID, a session key, and a sub-session key, as defined in the FiRa specification. However, the scope of the present disclosure is not limited thereto.

More specifically, as illustrated in FIG. 12, the FiRa applets 13 and 23 may generate session data in response to the request of the applications 11 and 21 and transmit the generated session data to the applications 11 and 21 (S124-1 to S126-1, and S124-2 to S126-2). The request for generation of the session data may be implemented, for example, with the "PUT DATA" command and a "TERMINATE SESSION" message, as defined in the FiRa specification, but the scope of the present disclosure is not limited thereto.

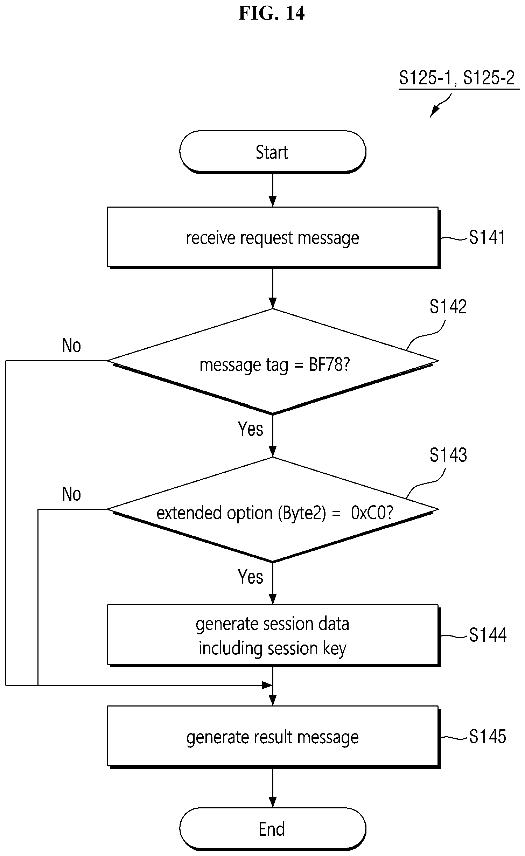

Detailed processes of steps S125-1 and S125-2 are illustrated in FIG. 14.

As illustrated in FIG. 14, the session data generation step S125-2 (or S125-1) may begin when the FiRa applet 23 receives the request message (S141).

In a step S 142, the FiRa applet 23 may check the tag of the received request message. Specifically, the FiRa applet 23 may check whether the tag of the received request message is a session data tag. In FIG. 15, because a value of the session data tag defined in the FiRa specification is "0xBF78", the tag of the request message is compared with "0xBF78."

A format of the request message that may be received in a step S 141 may be designed, for example, as illustrated in Table 9 below. However, the scope of the present disclosure is not limited thereto. Refer to the FiRa specification for the detailed descriptions of each field in Table 9 below.

**[Table 9]**

| Tag | | | Length | Description | Presence |
|---|---|---|---|---|---|
| 0xBF78 | | | Variable | Session info | Mandatory |
| | 0xA5 | | Variable | Secure ranging info | Mandatory |
| | | 0x80 | Variable | UWB_SESSION_KEY_INFO (InstanceUID\|RandomValue) | Mandatory |
| | | 0x81 | Variable | UWB_SUB_SESSION_KEY_INFO | Option |

In a step S143, the FiRa applet 23 may determine whether the current authentication mode is the fast authentication mode by using the setting value of the extended option field of the ADF.

In a step S144, the FiRa applet 23 may generate the session data including the session key. Herein, the session data may be data for UWB ranging as defined in the FiRa specification. In more detail, the FiRa applet 23 may acquire the authentication key from the application data field of the ADF using the ADF instance UID of the received session basic information, and may generate the session data (e.g., a session ID, a session key, and a sub-session key) using the acquired authentication key, the instance UID of the ADF, and the random value. However, a specific method of generating the session data may vary according to embodiments.

In one embodiment, the FiRa applet 23 may generate encryption data by encrypting the instance UID of the ADF and the random value with the authentication key, and may derive the session ID and the session key from the generated encryption data. For example, a portion (e.g., 0-4 bytes) of the encryption data may be a session ID, and a hash value of the encryption data may be the session key. However, the scope of the present disclosure is not limited thereto. According to the present embodiment, since the session ID and the session key are generated using the pre-shared authentication key and the random value, the security of UWB ranging-based authentication may be sufficiently ensured even if the secure channel is not established.

In another embodiment, the FiRa applet 23 may further generate the session data by using the encryption key for a pre-shared secure channel. For example, the FiRa applet 23 may generate the encryption data by using the encryption key for the secure channel as an initial vector and encrypting the instance UID of the ADF and the random value with the authentication key (e.g., encryption using an AES algorithm). In addition, the FiRa applet 23 may derive the session ID and the session key from the encryption data generated in a manner similar to the previous embodiment. Therefore, the security of UWB ranging-based authentication may be further improved.

In a step S145, the FiRa applet 23 may generate the message indicating the performance results. For example, the FiRa applet 23 may generate the error message (e.g., a message tag mismatch, an authentication mode mismatch, etc.), or may generate the result message including the session data, according to the performance results.

It will be described again with reference to FIG. 11.

In steps S1 14-1 and S1 14-2, each of the first terminal 10 and the second terminal 20 may set data for UWB ranging based on the generated session data. The ranging data may include, for example, the session data as defined in the FiRa specification. However, the scope of the present disclosure is not limited thereto.

More specifically, as illustrated in FIG. 12, the FiRa applets 13 and 23 may transmit ranging data to SUS applets 14 and 24 in response to the request of the applications 11 and 21, leading to setting the ranging data (S127-1 and S128-1, and S127-2 and S128-2). A request for generation the ranging data may be implemented, for example, with a "PUT DATA" command defined in the FiRa specification. However, the scope of the present disclosure is not limited thereto. Refer also to the FiRa specification for setting the ranging data.

It will be described again with reference to FIG. 11.

In a step S115, the UWB ranging may be performed between the first terminal 10 and the second terminal 20. Refer to the FiRa specification for a detailed process of the UWB ranging.

So far, the authentication process 33 according to some embodiments of the present disclosure has been described with reference to FIGS. 11 to 14. As described above, the session key for the UWB ranging may be safely generated using the pre-shared authentication key and the random value. Accordingly, the authentication may be performed between the terminals 10 and 20 in a safe manner without using (establishing) the secure channel, and the time taken for authentication may be significantly reduced. In addition, the power consumed during the authentication may be minimized.

Hereinafter, the authentication key deletion process 34 according to some embodiments of the present disclosure will be described in detail with reference to FIGS. 15 to 17.

FIG. 15 is an exemplary flowchart illustrating the authentication key deletion process 34 according to some embodiments of the present disclosure. However, this is only a preferred embodiment for achieving the object of the present disclosure, and some steps may be added or deleted as necessary.

As illustrated in FIG. 15, the authentication key deletion process 34 according to embodiments may being at a step S151 of establishing the secure channel between the first terminal 10 and the second terminal 20.

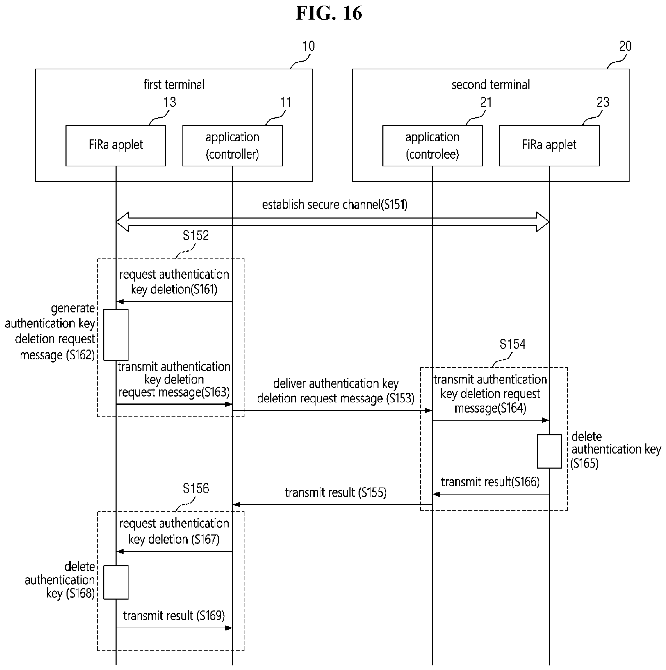

In a step S152, the first terminal 10 may generate the authentication key deletion request message. A detailed process of the present step is illustrated in FIG. 16.

As illustrated in FIG. 16, the FiRa applet 13 may generate the authentication key deletion request message including the instance UID of the ADF (i.e., the controller-side ADF to be deleted) in response to the authentication key deletion request of the application 11, and may transmit the generated message to the application 11 (S161 to S163). The authentication key deletion request may be implemented, for example, with the "TUNNEL" and "PUT DATA" commands specified in the FiRa specification, and the transmission of the authentication key deletion request message may be implemented with the "DISPATCH RESPONSE" command specified in the FiRa specification. However, the scope of the present disclosure is not limited thereto.

It will be described again with reference to FIG. 11.

In a step S153, the first terminal 10 may transmit the authentication key deletion request message to the second terminal 20.

In a step S154, the second terminal 20 may delete the authentication key. A detailed process of the present step is illustrated in FIG. 16.

As illustrated in FIG. 16, the FiRa applet 23 may delete the authentication key in response to the authentication key deletion request (e.g., reception of the authentication key deletion request message) of the application 21, and may transmit the deletion result to the application 21 (S164 to S166). The transmission of the deletion result may be implemented, for example, with the "DISPATCH RESPONSE" command defined in the FiRa specification. However, the scope of the present disclosure is not limited thereto.

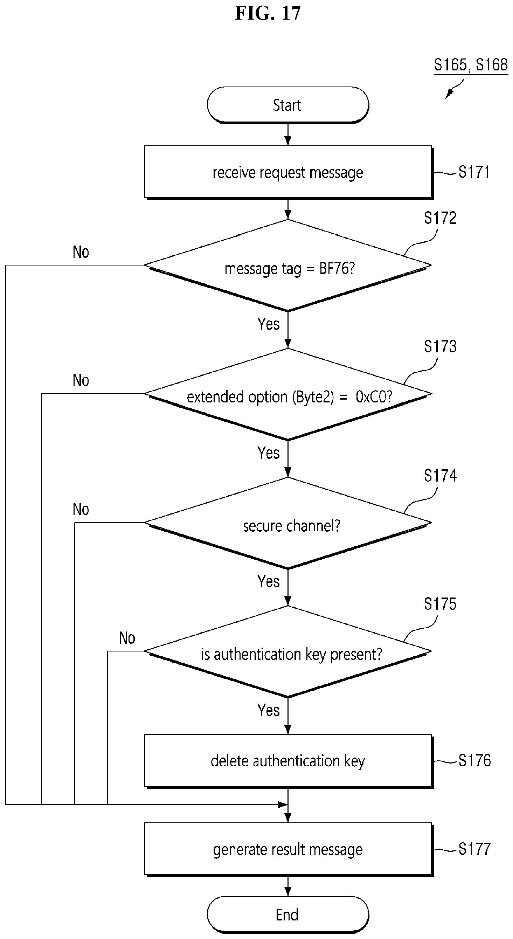

A detailed process of the step S165 is illustrated in FIG. 17.

As illustrated in FIG. 17, an authentication key deletion step S165 may begin at a step S171 in which the FiRa applet 23 receives the request message from the application 21. For example, the FiRa applet 23 may receive the authentication key deletion request message including a key data deletion tag and the instance UID of the ADF.

A format of the request message that may be received in step S171 may be designed, for example, as illustrated in Table 10 below. However, the scope of the present disclosure is not limited thereto. In Table 10 below, the value of "0x7B" is a tag value of a newly defined message in association with the authentication key deletion process, and the value may be changed arbitrarily.

**[Table 10]**

| Tag | | | Length | Description | Presence |
|---|---|---|---|---|---|
| 0xBF76 | | | Variable | Application data tag | Mandatory |
| | 0x7B | | Variable | Delete key data | Mandatory |
| | | 0x80 | 1 ~ 16 | Instance UID | Mandatory |

In a step S172, the FiRa applet 23 may check the tag of the received request message. For example, the FiRa applet 23 may check whether the tag of the received request message is the application data tag.

In a step S 173, the FiRa applet 23 may determine whether the current authentication mode is the fast authentication mode by using the setting value of the extended option field of the ADF.

In a step S174, the FiRa applet 23 may check whether the secure channel is established with the first terminal 10.

In a step S175, the FiRa applet 23 may determine whether the authentication key is present. For example, the FiRa applet 23 may determine whether the authentication key is present in the application data field of the ADF using the instance UID of the ADF included in the authentication key deletion request message. In response to determining that the authentication key is present, a step S176 may occur.

In the step S176, the FiRa applet 23 may delete the authentication key. In other words, the FiRa applet 23 may delete the authentication key stored in the application data field of the ADF.

In a step S177, the FiRa applet 23 may generate the message indicating the performance results. For example, the FiRa applet 23 may generate the error message (e.g., a message tag mismatch, an authentication mode mismatch, the non-presence of the authentication key, the non-establishment of the secure channel, etc.), or may generate result message notifying the success of the deletion, according to the performance results.

It will be described again with reference to FIG. 15.

In a step S155, the second terminal 20 may transmit the result of deleting the authentication key to the first terminal 10.

In step S156, the first terminal 10 may also delete the authentication key. The present step is similar to the step S154 described above, and a description thereof will be omitted herein (refer to steps S164 to S166 for the description of steps S167 to S169).

So far, the authentication key deletion process 34 according to some embodiments of the present disclosure has been described with reference to FIGS. 14 to 17.

Meanwhile, according to the current FiRa specification, a method capable of confirming an ADF list managed by the FiRa applet (e.g., 13) fails to be defined, and when the instance UID is not known, the presence or absence of a certain ADF cannot be determined. For example, when the instance UID is not known, the presence or absence of the certain ADF may not be determined using a "SELECT ADF" command. Accordingly, a command (or message) capable of acquiring a list of ADFs managed by the FiRa applet (e.g., 13) needs to be additionally defined. Such a command may be easily implemented with a command of "GET DATA" and a new tag value (e.g., "0xBFAD") associated with ADF information, and a response message to the corresponding command may be designed, for example, as described in Table 11.

**[Table 11]**

| Tag | | Length | Description | Presence |
|---|---|---|---|---|
| 0xBFAD | | Variable | ADF Info | Mandatory |
| | 0x80 | 1 to 16 | OID | Mandatory |
| | 0x81 | Variable | Instance UID | Option |

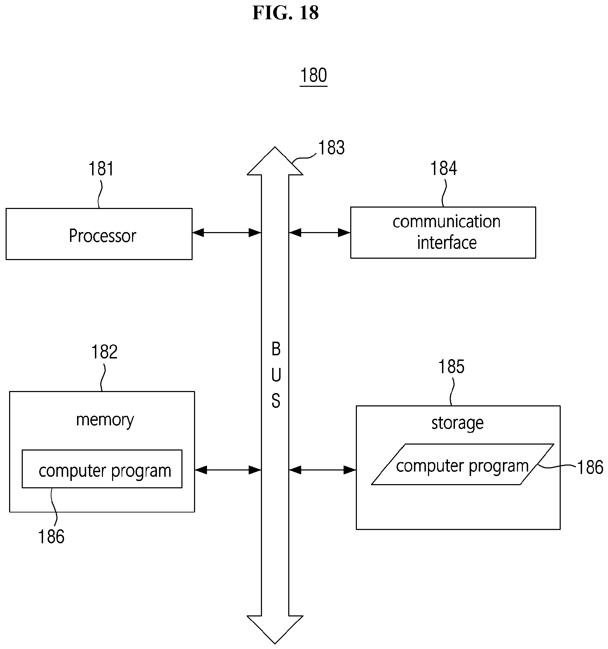

Hereinafter, an exemplary computing device 180 capable of implementing the first terminal 10 and/or the second terminal 20 described above will be briefly described with reference to FIG. 18.

FIG. 18 illustrates a diagram illustrating a hardware configuration of the computing device 180.

As illustrated in FIG. 18, the computing device 180 may include one or more processors 181, a bus 183, a communication interface 182, a memory 184 configured to load a computer program 186 performed by the processor 181, and a storage 185 configured to store the computer program 186.

The processor 181 may control an overall operation of each component of the computing device 180. The processor 181 may include at least one of a central processing unit (CPU), a micro-processor unit (MPU), a micro-controller unit (MCU), a graphical processing unit (GPU), or any type of processor known in the technical field of the present disclosure. In addition, the processor 181 may perform an arithmetic operation on at least one applet, application, and/or program for the purpose of executing the method/operation according to various embodiments of the present disclosure. The computing device 180 may include one or more processors 181.

Next, the memory 184 may store different kinds of data, instructions, and/or information. The memory 184 may load one or more computer programs 186 from storage 185 to execute method/operations according to various embodiments of the present disclosure. An example of the memory 184 may be a RAM, but the present invention is not limited thereto.

Next, the bus 183 may provide a communication function between components of the computing device 180. The bus 183 may be implemented as various types of buses such as an address bus, a data bus, and a control bus.

Next, the communication interface 182 may support wired or wireless communication of the computing device 180. For example, the communication interface 182 may support various types of proximity communication, and may further support a variety of communication methods. The communication interface 182 may include a communication module known in the technical field of the present disclosure.

Next, the storage 185 may non-temporarily store one or more computer programs 186. The storage 185 may include a non-volatile memory such as a flash memory, a hard disk, a removable disk, or any type of computer-readable recording medium known in the technical field to which the present disclosure belongs.

The computer program 186 may include one or more instructions in which methods/operations according to a variety of embodiments of the present disclosure are implemented. When the computer program 186 is loaded into the memory 184, the processor 181 may perform the methods/operations according to a variety of embodiments of the present disclosure by executing the loaded instructions.

For example, the computer program 186 may include the instructions implementing the operations of the application 11 and the applet 12. In this case, the first terminal 10 according to some embodiments of the present disclosure may be implemented with the computing device 180.
As another example, the computer program 186 may include instructions implementing operations of the application 21 and the applet 22. In this case, the second terminal 20 according to some embodiments of the present disclosure may be implemented with the computing device 180.

So far, the exemplary computing device 180 capable of implementing the terminals 10 and 20 according to some embodiments of the present disclosure has been described with reference to FIG. 18.

The technical features of the present disclosure described so far may be embodied as computer readable codes on a computer readable medium. The computer readable medium may be, for example, a removable recording medium (CD, DVD, Blu-ray disc, USB storage device, removable hard disk) or a fixed recording medium (ROM, RAM, computer equipped hard disk). The computer program recorded on the computer readable medium may be transmitted to other computing device via a network such as internet and installed in the other computing device, thereby being used in the other computing device.

Although operations are shown in a specific order in the drawings, it should not be understood that desired results can be obtained when the operations must be performed in the specific order or sequential order or when all of the operations must be performed. In certain situations, multitasking and parallel processing may be advantageous. According to the above-described embodiments, it should not be understood that the separation of various configurations is necessarily required, and it should be understood that the described program components and systems may generally be integrated together into a single software product or be packaged into multiple software products.

In concluding the detailed description, those skilled in the art will appreciate that many variations and modifications can be made to the preferred embodiments without departing from the scope of the claims. Therefore, the disclosed preferred embodiments of the disclosure are used in a generic and descriptive sense only and not for purposes of limitation.

## Claims

1. An authentication method in a secure channel unused mode on a first terminal (10) in which Fine Ranging, FiRa, applet (13) is executed, the method comprising:
generating (S111) a session basic information comprising a random value;
transmitting (S112) the generated session basic information to a second terminal (20) without establishing a secure channel with the second terminal (20);
generating (S113-1) session data comprising a session key from the generated session basic information by using an authentication key pre-shared with the second terminal (20); and
performing (S115) ultra-wide band, UWB, ranging with the second terminal (20) by using the generated session data.

2. The authentication method of claim 1, wherein the session basic information further comprises an instance Unique Identifier, UID, of an application dedicated file, ADF.

3. The authentication method of claim 2, wherein the generating (S111) of the session data comprises:
generating encryption data by encrypting the random value and the instance UID with the authentication key; and
deriving the session key from the encryption data.

4. The authentication method of claim 3, wherein the generating (S111) of the encryption data comprises generating the encryption data by further using an encryption key for a pre-shared secure channel.

5. The authentication method of claim 2, wherein the session data further comprises a session ID, and
the generating (S 113-1) of the session data comprises:
generating encryption data by encrypting the random value and the instance UID with the authentication key; and
deriving the session ID from the encryption data.

6. The authentication method of claim 1, wherein the generating (S113-1) of the session data comprises:
determining a current authentication mode by using a setting value in a field of an application documented file, ADF; and
in response to determining that the current authentication mode is the secure channel unused mode, generating the session data.

7. The authentication method of claim 6, wherein the field is an extended option field of the ADF.

8. An authentication method in a secure channel unused mode on a second terminal (20) in which Fine Ranging, FiRa, applet (23) is executed, the method comprising:
receiving (S112) a session basic information comprising a random value from a first terminal (10) without establishing a secure channel with the first terminal (10);
generating (S113-2) session data comprising a session key from the received session basic information by using an authentication key pre-shared with the first terminal (10); and
performing (S115) ultra-wide band, UWB, ranging with the first terminal (10) by using the generated session data.

9. The authentication method of claim 8, wherein the session basic information further comprises an instance Unique Identifier, UID, of an application dedicated file, ADF;
an authentication key is stored in a certain field of the ADF; and
the generating (S113-2) of the session data comprises:
acquiring the authentication key in the field by using the instance UID included in the session basic information; and
generating the session data by using the authentication key.

10. The authentication method of claim 8, wherein the generating (S113-2) of the session data comprises:
determining (S143) a current authentication mode by using a setting value in a field of an application documented file, ADF; and
in response to determining that the current authentication mode is the secure channel unused mode, generating the session data.

11. The authentication method of claim 1, further comprising:
acquiring (31) the authentication key;
storing the acquired authentication key in a first field of an application dedicated file, ADF; and
sharing the acquired authentication key with the second terminal via a secure channel.

12. The authentication method of claim 11, wherein the first field is an application data field of the ADF.

13. The authentication method of claim 11, wherein the acquiring (31) the authentication key comprises generating (S42) the authentication key by the FiRa applet (13).

14. The authentication method of claim 13, wherein the acquiring (31) of the authentication key comprises:
determining (S54) whether a pre-stored authentication key is present in the first field by using an instance Unique Identifier, UID, of the ADF; and
in response to determining that the pre-stored authentication key fails to be present, generating the authentication key.

15. The authentication method of claim 13, wherein the generating (S42) of the authentication key comprises:
determining (S53) a current authentication mode by using a setting value in a second field of the ADF; and
in response to determining that the current authentication mode is the secure channel unused mode, generating the authentication key.

16. The authentication method of claim 11, wherein the acquiring (31) of the authentication key comprises receiving (S61) the authentication key from an outside by an application (11) executed by the first terminal (10); and
the storing of the authentication key comprises storing (S63) the received authentication key by the FiRa applet (13).

17. The authentication method of claim 8, further comprising:
receiving (S84) the authentication key from a first terminal (10) via a secure channel; and
storing (S95) the received authentication key in a first field of an application dedicated file, ADF.

18. The authentication method of claim 17, wherein the storing (S95) the authentication key comprises:
determining (S103) a current authentication mode by using a setting value in a second field of the ADF; and
in response to determining that the current authentication mode is the secure channel unused mode, storing the received authentication key.

19. The authentication method of claim 17, wherein the second terminal (20) further receives an instance Unique Identifier, UID, of the ADF from the first terminal (10); and
the storing (S95) of the received authentication key comprises:
determining (S105) whether a pre-stored authentication key is present in the first field by using the received instance UID; and
in response to determining that the pre-stored authentication key fails to be present, storing the received authentication key.

20. The authentication method of claim 17, further comprising:
receiving (S 171) an authentication key deletion request message including the instance UID of the ADF from the first terminal (10);
determining (S175) whether the pre-stored authentication key is present in the first field by using the instance UID; and
in response to determining that the pre-stored authentication key is present, deleting (S154) the pre-stored authentication key.

## Patentansprüche

1. Authentifizierungsverfahren in einem ungenutzten Modus eines sicheren Kanals auf einem ersten Endgerät (10), in dem ein Fine Ranging, FiRa, Applet (13) ausgeführt wird, wobei das Verfahren umfasst:
Erzeugen (S111) von Sitzungsbasisinformationen, die einen Zufallswert umfassen;
Senden (S112) der erzeugten Sitzungsbasisinformationen an ein zweites Endgerät (20), ohne einen sicheren Kanal mit dem zweiten Endgerät (20) einzurichten;
Erzeugen (S113-1) von Sitzungsdaten, die einen Sitzungsschlüssel umfassen, aus den erzeugten Sitzungsbasisinformationen unter Verwendung eines Authentifizierungsschlüssels, der vorab mit dem zweiten Endgerät (20) geteilt wurde; und
Durchführen (S115) einer Ultrabreitband-, UWB, Entfernungsbestimmung (Ranging) mit dem zweiten Endgerät (20) unter Verwendung der erzeugten Sitzungsdaten.

2. Authentifizierungsverfahren nach Anspruch 1, wobei die Sitzungsbasisinformationen ferner eine Instanz-eindeutige Kennung, Instanz-UID, einer anwendungsspezifischen Datei, ADF (Application Dedicated File), umfassen.

3. Authentifizierungsverfahren nach Anspruch 2, wobei das Erzeugen (S111) der Sitzungsdaten umfasst:
Erzeugen von Verschlüsselungsdaten durch Verschlüsseln des Zufallswerts und der Instanz-UID mit dem Authentifizierungsschlüssel; und
Ableiten des Sitzungsschlüssels aus den Verschlüsselungsdaten.

4. Authentifizierungsverfahren nach Anspruch 3, wobei das Erzeugen (S111) der Verschlüsselungsdaten Erzeugen der Verschlüsselungsdaten durch weiteres Verwenden eines Verschlüsselungsschlüssels für einen vorab gemeinsam genutzten sicheren Kanal umfasst.

5. Authentifizierungsverfahren nach Anspruch 2, wobei die Sitzungsdaten ferner eine Sitzungs-ID umfassen, und
das Erzeugen (S113-1) der Sitzungsdaten umfasst:
Erzeugen von Verschlüsselungsdaten durch Verschlüsseln des Zufallswerts und der Instanz-UID mit dem Authentifizierungsschlüssel; und
Ableiten der Sitzungs-ID aus den Verschlüsselungsdaten.

6. Authentifizierungsverfahren nach Anspruch 1, wobei das Erzeugen (S113-1) der Sitzungsdaten umfasst:
Bestimmen eines aktuellen Authentifizierungsmodus unter Verwendung eines Einstellwerts in einem Feld einer anwendungsdokumentierten Datei, ADF; und
als Reaktion auf ein Bestimmen, dass der aktuelle Authentifizierungsmodus der ungenutzte Modus des sicheren Kanals ist, Erzeugen der Sitzungsdaten.

7. Authentifizierungsverfahren nach Anspruch 6, wobei das Feld ein erweitertes Optionsfeld der ADF ist.

8. Authentifizierungsverfahren in einem ungenutzten Modus eines sicheren Kanals auf einem zweiten Endgerät (20), in dem ein Fine Ranging, FiRa, Applet (23) ausgeführt wird, wobei das Verfahren umfasst:
Empfangen (S112) von Sitzungsbasisinformationen, die einen Zufallswert umfassen, von einem ersten Endgerät (10), ohne einen sicheren Kanal mit dem ersten Endgerät (10) einzurichten;
Erzeugen (S113-2) von Sitzungsdaten, die einen Sitzungsschlüssel umfassen, aus den empfangenen Sitzungsbasisinformationen unter Verwendung eines Authentifizierungsschlüssels, der vorab mit dem ersten Endgerät (10) geteilt wurde; und
Durchführen (S115) einer Ultrabreitband-, UWB, Entfernungsmessung (Ranging) mit dem ersten Endgerät (10) unter Verwendung der erzeugten Sitzungsdaten.

9. Authentifizierungsverfahren nach Anspruch 8, wobei die Sitzungsbasisinformationen ferner eine Instanz-eindeutige Kennung, Instanz-UID, einer anwendungsspezifischen Datei, ADF, umfassen;
ein Authentifizierungsschlüssel in einem bestimmten Feld der ADF gespeichert wird; und
das Erzeugen (S113-2) der Sitzungsdaten umfasst:
Erwerben des Authentifizierungsschlüssels vor Ort unter Verwendung der in den Sitzungsbasisinformationen enthaltenen Instanz-UID; und
Erzeugen der Sitzungsdaten unter Verwendung des Authentifizierungsschlüssels.

10. Authentifizierungsverfahren nach Anspruch 8, wobei das Erzeugen (S 113-2) der Sitzungsdaten umfasst:
Bestimmen (S 143) eines aktuellen Authentifizierungsmodus unter Verwendung eines Einstellwerts in einem Feld einer anwendungsdokumentierten Datei, ADF; und
als Reaktion auf ein Bestimmen, dass der aktuelle Authentifizierungsmodus der ungenutzte Modus des sicheren Kanals ist, Erzeugen der Sitzungsdaten.

11. Authentifizierungsverfahren nach Anspruch 1, ferner umfassend:
Erwerben (31) des Authentifizierungsschlüssels;
Speichern des erworbenen Authentifizierungsschlüssels in einem ersten Feld einer anwendungsspezifischen Datei, ADF;
Teilen des erworbenen Authentifizierungsschlüssels mit dem zweiten Endgerät über einen sicheren Kanal.

12. Authentifizierungsverfahren nach Anspruch 11, wobei das erste Feld ein Anwendungsdatenfeld der ADF ist.

13. Authentifizierungsverfahren nach Anspruch 11, wobei das Erwerben (31) des Authentifizierungsschlüssels Erzeugen (S42) des Authentifizierungsschlüssels durch das FiRa-Applet (13) umfasst.

14. Authentifizierungsverfahren nach Anspruch 13, wobei das Erwerben (31) des Authentifizierungsschlüssels umfasst:
Bestimmen (S54), ob ein vorab gespeicherter Authentifizierungsschlüssel in dem ersten Feld vorhanden ist, unter Verwendung einer Instanz-eindeutigen Kennung, UID, der ADF; und
als Reaktion auf ein Bestimmen, dass der vorab gespeicherte Authentifizierungsschlüssel nicht vorhanden ist, Erzeugen des Authentifizierungsschlüssels.

15. Authentifizierungsverfahren nach Anspruch 13, wobei das Erzeugen (S42) des Authentifizierungsschlüssels umfasst:
Bestimmen (S53) eines aktuellen Authentifizierungsmodus unter Verwendung eines Einstellwerts in einem zweiten Feld der ADF; und
als Reaktion auf ein Bestimmen, dass der aktuelle Authentifizierungsmodus der ungenutzte Modus des sicheren Kanals ist, Erzeugen des Authentifizierungsschlüssels.

16. Authentifizierungsverfahren nach Anspruch 11, wobei das Erwerben (31) des Authentifizierungsschlüssels Empfangen (S61) des Authentifizierungsschlüssels von außen durch eine Anwendung (11), die von dem ersten Endgerät (10) ausgeführt wird, umfasst; und
das Speichern des Authentifizierungsschlüssels Speichern (S63) des von dem FiRa-Applet (13) empfangenen Authentifizierungsschlüssels umfasst.

17. Authentifizierungsverfahren nach Anspruch 8, ferner umfassend:
Empfangen (S84) des Authentifizierungsschlüssels von einem ersten Endgerät (10) über einen sicheren Kanal; und
Speichern (S95) des empfangenen Authentifizierungsschlüssels in einem ersten Feld einer anwendungsspezifischen Datei, ADF.

18. Authentifizierungsverfahren nach Anspruch 17, wobei das Speichern (S95) des Authentifizierungsschlüssels umfasst:
Bestimmen (S103) eines aktuellen Authentifizierungsmodus unter Verwendung eines Einstellwerts in einem zweiten Feld der ADF; und
als Reaktion auf ein Bestimmen, dass der aktuelle Authentifizierungsmodus der ungenutzte Modus des sicheren Kanals ist, Speichern des empfangenen Authentifizierungsschlüssels.

19. Authentifizierungsverfahren nach Anspruch 17, wobei das zweite Endgerät (20) ferner eine Instanz-eindeutige Kennung, Instanz-UID, der ADF von dem ersten Endgerät (10) empfängt; und
das Speichern (S95) des empfangenen Authentifizierungsschlüssels umfasst:
Bestimmen (S105), ob ein vorab gespeicherter Authentifizierungsschlüssel in dem ersten Feld vorhanden ist, unter Verwendung der empfangenen Instanz-UID; und
als Reaktion auf ein Bestimmen, dass der vorab gespeicherte Authentifizierungsschlüssel nicht vorhanden ist, Speichern des empfangenen Authentifizierungsschlüssels.

20. Authentifizierungsverfahren nach Anspruch 17, ferner umfassend:
Empfangen (S171) einer Anforderungsnachricht zum Löschen des Authentifizierungsschlüssels, die die Instanz-UID der ADF aufweist, von dem ersten Endgerät (10);
Bestimmen (S175), ob der vorab gespeicherte Authentifizierungsschlüssel in dem ersten Feld vorhanden ist, unter Verwendung der Instanz-UID; und
als Reaktion auf ein Bestimmen, dass der vorab gespeicherte Authentifizierungsschlüssel vorhanden ist, Löschen (S154) des vorab gespeicherten Authentifizierungsschlüssels.

## Revendications

1. Procédé d'authentification dans un mode à canal sécurisé non utilisé sur un premier terminal (10) dans lequel une mini-application de télémétrie fine/Fine Ranging, FiRa, applet (13) est exécutée, le procédé comprenant :
la génération (S111) d'une information basique de session comprenant une valeur aléatoire ;
l'émission (S112) de l'information basique de session générée sur un second terminal (20) sans établir un canal sécurisé avec le second terminal (20) ;
la génération (S113-1) de données de session comprenant une clé de session à partir de l'information basique de session générée en utilisant une clé d'authentification pré-partagée avec le second terminal (20) ; et
la réalisation (S115) d'une télémétrie à bande ultra-large, UWB, avec le second terminal (20) en utilisant les données de session générées.

2. Procédé d'authentification selon la revendication 1, dans lequel l'information basique de session comprend en outre un identifiant unique, UID, d'instance d'un fichier dédié à l'application, ADF.

3. Procédé d'authentification selon la revendication 2, dans lequel la génération (S111) des données de session comprend :
la génération de données de cryptage en cryptant la valeur aléatoire et l'UID d'instance à l'aide de la clé d'authentification ; et
la dérivation de la clé de session à partir des données de cryptage.

4. Procédé d'authentification selon la revendication 3, dans lequel la génération (S111) des données de cryptage comprend la génération des données de cryptage en utilisant en outre une clé de cryptage pour un canal sécurisé pré-partagé.

5. Procédé d'authentification selon la revendication 2, dans lequel les données de session comprennent en outre un ID de session, et
la génération (S113-1) des données de session comprend :
la génération de données de cryptage en cryptant la valeur aléatoire et l'UID d'instance à l'aide de la clé d'authentification ; et
la dérivation de l'ID de session à partir des données de cryptage.

6. Procédé d'authentification selon la revendication 1, dans lequel la génération (S113-1) des données de session comprend :
la détermination d'un mode d'authentification courant en utilisant une valeur de définition dans un champ d'un fichier documenté par l'application, ADF ; et
en réponse à la détermination du fait que le mode d'authentification courant est le mode à canal sécurisé non utilisé, la génération des données de session.

7. Procédé d'authentification selon la revendication 6, dans lequel le champ est un champ d'option étendue de l'ADF.

8. Procédé d'authentification dans un mode à canal sécurisé non utilisé sur un second terminal (20) dans lequel une mini-application de télémétrie fine/Fine Ranging, FiRa, applet (23) est exécutée, le procédé comprenant :
la réception (S112) d'une information basique de session comprenant une valeur aléatoire en provenance d'un premier terminal (10) sans établir un canal sécurisé avec le premier terminal (10) ;
la génération (S113-2) de données de session comprenant une clé de session à partir de l'information basique de session reçue en utilisant une clé d'authentification pré-partagée avec le premier terminal (10) ; et
la réalisation (S115) d'une télémétrie à bande ultra-large, UWB, avec le premier terminal (10) en utilisant les données de session générées.

9. Procédé d'authentification selon la revendication 8, dans lequel l'information basique de session comprend en outre un identifiant unique, UID, d'instance d'un fichier dédié à l'application, ADF ;
une clé d'authentification est stockée dans un certain champ de l'ADF ; et
la génération (S113-2) des données de session comprend :
l'acquisition de la clé d'authentification dans le champ en utilisant l'UID d'instance inclus dans l'information basique de session ; et
la génération des données de session en utilisant la clé d'authentification.

10. Procédé d'authentification selon la revendication 8, dans lequel la génération (S113-2) des données de session comprend :
la détermination (S143) d'un mode d'authentification courant en utilisant une valeur de définition dans un champ d'un fichier documenté par l'application, ADF ; et
en réponse à la détermination du fait que le mode d'authentification courant est le mode à canal sécurisé non utilisé, la génération des données de session.

11. Procédé d'authentification selon la revendication 1, comprenant en outre :
l'acquisition (31) de la clé d'authentification ;
le stockage de la clé d'authentification acquise dans un premier champ d'un fichier dédié à l'application, ADF ; et
le partage de la clé d'authentification acquise avec le second terminal via un canal sécurisé.

12. Procédé d'authentification selon la revendication 11, dans lequel le premier champ est un champ de données d'application de l'ADF.

13. Procédé d'authentification selon la revendication 11, dans lequel l'acquisition (31) de la clé d'authentification comprend la génération (S42) de la clé d'authentification par l'applet FiRa (13).

14. Procédé d'authentification selon la revendication 13, dans lequel l'acquisition (31) de la clé d'authentification comprend :
la détermination (S54) de si une clé d'authentification pré-stockée est ou non présente dans le premier champ en utilisant un identifiant unique, UID, d'instance de l'ADF ; et
en réponse à la détermination du fait que la clé d'authentification pré-stockée échoue à être présente, la génération de la clé d'authentification.

15. Procédé d'authentification selon la revendication 13, dans lequel la génération (S42) de la clé d'authentification comprend :
la détermination (S53) d'un mode d'authentification courant en utilisant une valeur de définition dans un second champ de l'ADF ; et
en réponse à la détermination du fait que le mode d'authentification courant est le mode à canal sécurisé non utilisé, la génération de la clé d'authentification.

16. Procédé d'authentification selon la revendication 11, dans lequel l'acquisition (31) de la clé d'authentification comprend la réception (S61) de la clé d'authentification depuis un extérieur par une application (11) exécutée par le premier terminal (10) ; et
le stockage de la clé d'authentification comprend le stockage (S63) de la clé d'authentification reçue par l'applet FiRa (13).

17. Procédé d'authentification selon la revendication 8, comprenant en outre :
la réception (S84) de la clé d'authentification en provenance d'un premier terminal (10) via un canal sécurisé ; et
le stockage (S95) de la clé d'authentification reçue dans un premier champ d'un fichier dédié à l'application, ADF.

18. Procédé d'authentification selon la revendication 17, dans lequel le stockage (S95) de la clé d'authentification comprend :
la détermination (S103) d'un mode d'authentification courant en utilisant une valeur de définition dans un second champ de l'ADF ; et
en réponse à la détermination du fait que le mode d'authentification courant est le mode à canal sécurisé non utilisé, le stockage de la clé d'authentification reçue.

19. Procédé d'authentification selon la revendication 17, dans lequel le second terminal (20) reçoit en outre un identifiant unique, UID, d'instance de l'ADF en provenance du premier terminal (10) ; et
le stockage (S95) de la clé d'authentification reçue comprend :
la détermination (S105) de si une clé d'authentification pré-stockée est ou non présente dans le premier champ en utilisant l'UID d'instance reçu ; et
en réponse à la détermination du fait que la clé d'authentification pré-stockée échoue à être présente, le stockage de la clé d'authentification reçue.

20. Procédé d'authentification selon la revendication 17, comprenant en outre :
la réception (S171) d'un message de demande de suppression de clé d'authentification incluant l'UID d'instance de l'ADF en provenance du premier terminal (10) ;
la détermination (S175) de si la clé d'authentification pré-stockée est ou non présente dans le premier champ en utilisant l'UID d'instance ; et
en réponse à la détermination du fait que la clé d'authentification pré-stockée est présente, la suppression (S154) de la clé d'authentification pré-stockée.
